Europäisches Patentamt

European Patent Office

Office européen des brevets

(19)

(11) Veröffentlichungsnummer: **0 277 535 B1**

## EUROPÄISCHE PATENTSCHRIFT

(12)

(45) Veröffentlichungstag der Patentschrift: **24.07.91**

(51) Int. Cl.⁵: **E04F 13/14, B64C 1/14**

(21) Anmeldenummer: **88100637.3**

(22) Anmeldetag: **19.01.88**

(54) **Fassadenplatte in Form einer Verbundglasscheibe.**

(30) Priorität: **05.02.87 DE 8701693 U**

(43) Veröffentlichungstag der Anmeldung:
**10.08.88 Patentblatt 88/32**

(45) Bekanntmachung des Hinweises auf die
Patenterteilung:
**24.07.91 Patentblatt 91/30**

(84) Benannte Vertragsstaaten:
**AT BE DE FR GB IT NL SE**

(56) Entgegenhaltungen:
**DE-C- 732 014**
**FR-A- 2 046 411**
**US-A- 2 834 998**
**US-A- 4 601 147**

(73) Patentinhaber: **FLACHGLAS AKTIENGESELL-
SCHAFT**
**Otto-Seeling-Promenade 10-14**
**W-8510 Fürth(DE)**

(72) Erfinder: **Süfke, Hans Jürgen**
**Osterfeldstrasse 4a**
**W-4630 Bochum 6(DE)**

(74) Vertreter: **Andrejewski, Walter et al**
**Patentanwälte Dipl.-Phys. Dr. Walter Andrejewski Dipl.-Ing. Dr.-Ing. Manfred Honke
Dipl.-Phys. Dr. Karl Gerhard Masch Theaterplatz 3, Postfach 10 02 54**
**W-4300 Essen 1(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich gattungsgemäß auf eine Fassadenplatte in Form einer Verbundglasscheibe aus wandseitiger Glasscheibe sowie sichtseitiger Scheibe, die durch eine Kunststoffschicht vereinigt sind, und Befestigungseinrichtung. Nach bevorzugter Ausführungsform sind alle Scheiben Glasscheiben. Es versteht sich, daß die Fassadenplatte farbig gestaltet sein kann. Insbesondere kann sie eine optisch wirksame Beschichtung aufweisen. Eine optisch wirksame Beschichtung ist im allgemeinen eine Farbbeschichtung oder eine reflektierende Beschichtung. Sie dient dazu, die im montierten Zustand hinter der Fassadenplatte liegenden Bauteile unsichtbar zu machen. Die Kunststoffschicht, die die wandseitige Glasscheibe und die sichtseitige Glasscheibe vereinigt, ist beispielsweise eine Polyvinylbutyralfolie oder eine Gießharzschicht.

Bei den (aus der Praxis) bekannten, gattungsgemäßen Fassadenplatten sind die Befestigungselemente Profile oder Beschläge, die am Rand bzw. im Bereich einer Ecke angeordnet sind. Das stört die Optik der Zusammenhänge im montierten Zustand, weil die Profile oder Beschläge sichtbar sind.

Der Erfindung liegt die Aufgabe zugrunde, eine gattungsgemäße Fassadenplatte so weiter auszubilden, daß eine vollkommen unsichtbare Befestigung vor einem Bauwerk möglich ist.

Zur Lösung dieser Aufgabe lehrt die Erfindung, daß die wandseitige Glasscheibe zumindest zwei Bohrungen aufweist, die mit einer Hinterschneidung versehen sind, und daß in die Bohrungen unter Zwischenschaltung einer Buchse jeweils ein metallisches Befestigungselement formschlüssig eingesetzt ist. Andere Befestigungsbauteile können an das Befestigungselement angeschlossen werden. - Die Erfindung nutzt die Tatsache, daß bei einer gattungsgemäßen Fassadenplatte ohne störende Beeinträchtigung der Festigkeit und der Stabilität Bohrungen für Befestigungselemente in die wandseitige Glasscheibe eingebracht und zugeordnet für Befestigungselemente eingesetzt werden können, über die im montierten Zustand die Beanspruchungen, insbesondere aus Gewicht und Windkräften eingetragen werden. Das gilt insbesondere dann, wenn zumindest die wandseitige Glasscheibe, die mit den Bohrungen versehen ist, aus Einscheibensicherheitsglas besteht. In festigkeitsmäßiger und stabilitätsmäßiger Hinsicht ausgezeichnet ist eine Ausführungsform, die dadurch gekennzeichnet ist, daß die Hinterschneidung einen kegelstumpfförmigen Querschnitt nach Art einer Senkbohrung aufweist. Man kann aber auch bajonettverschlußartige Verbindungen vorsehen. Ein Aggregat aus zwei Scheiben, von denen eine mit einer Bohrung versehen ist, die Hinterschneidungen aufweist, wobei ein zugeordnetes metallisches Befestigungselement eingesetzt ist, ist an sich bekannt (DE-C- 732 014), jedoch hat man hier nicht gewagt, die Bohrung unmittelbar in einer Scheibe anzuordnen, die eine Glasscheibe ist. Man hat vielmehr in der Glasscheibe eine Aussparung vorgesehen und in die Aussparung eine Kunststoffplatte eingeklebt, die ihrerseits mit der Bohrung und der Hinterschneidung versehen wurde. Überraschenderweise ist dieses bei einer gattungsgemäßen Fassadenplatte nicht erforderlich. Die farbliche Gestaltung, insbesondere eine optisch wirksame Beschichtung, machen im montierten Zustand der Fassadenplatte sowohl die Bohrung in der wandseitigen Glasscheibe als auch das eingesetzte Befestigungselement unsichtbar.

Im einzelnen bestehen im Rahmen der Erfindung mehrere Möglichkeiten der weiteren Ausbildung und Gestaltung. So kann die wandseitige Glasscheibe drei ein statisch bestimmtes Befestigungsaggregat bildende Befestigungselemente aufweisen. Man kann aber auch die wandseitige Scheibe im Bereich der Ecken jeweils mit einem Befestigungselement versehen. Es empfiehlt sich, die Buchse als Kunststoffbuchse auszuführen. Sie kann auch gegossen sein. Ein anderer Vorschlag geht in diesem Zusammenhang dahin, mit einer Buchse aus verhältnismäßig weichem Metall, beispielsweise Blei, zu arbeiten. Die Befestigungselemente sind vorzugsweise als Schraube oder Schraubelemente ausgeführt und mit einem Kopf versehen, der von der Hinterschneidung, unter Zwischenschaltung der Buchse, komplementär überfaßt ist.

Im folgenden wird die Erfindung anhand einer lediglich ein Ausführungsbeispiel darstellenden Zeichnung ausführlicher erläutert. Es zeigen in schematischer Darstellung

Fig. 1    einen Schnitt durch eine erfindungsgemäße Fassadenplatte, ausschnittsweise,

Fig. 2    eine Ansicht des Gegenstandes der Fig. 1 aus Sicht des Pfeiles A.

Die in den Figuren dargestellte Fassadenplatte ist in Gestalt einer Verbundglasscheibe aufgebaut. Sie besteht aus einer wandseitigen Glasscheibe 1 und einer sichtseitigen Glasscheibe 2, die beide durch eine Kunststoffschicht 3 vereinigt sind. Die sichtseitige Glasscheibe 2 ist kunststoffschichtseitig mit einer optisch wirksamen Beschichtung 4 versehen.

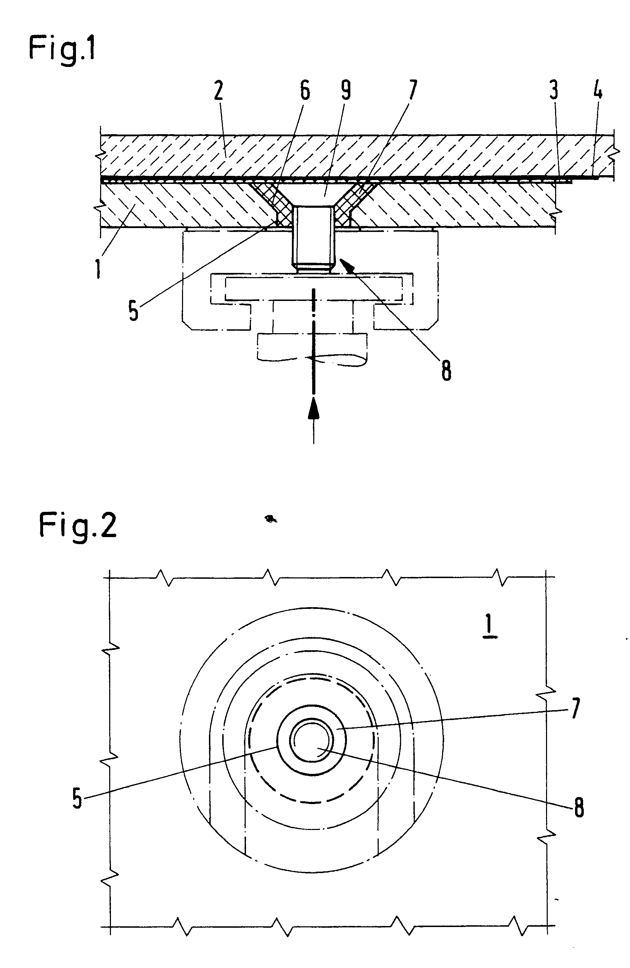

Die wandseitige Glasscheibe 1 besitzt zumindest zwei Bohrungen 5, die mit einer Hinterschneidung 6 versehen sind. Nur eine dieser Bohrungen 5 ist in dem Ausschnitt der Fig. 1 dargestellt. In diese Bohrung 5 ist unter Zwischenschaltung einer Buchse 7 ein metallisches Befestigungselement 8 formschlüssig eingesetzt. Dazu besteht die wandseitige Glasscheibe 1 zweckmäßigerweise aus Einscheibensicherheitsglas. Die Hinterschneidung 6 besitzt einen kegelstumpfförmigen Querschnitt nach Art einer Senkbohrung. - Die Fassadenplatte mag drei in der beschriebenen Weise aufgebaute Bohrungen 5 mit eingesetzten Befestigungselementen 8 aufweisen, die ein statisch bestimmtes Befestigungsaggregat bilden, oder auch im Bereich aller vier Ecken in der beschriebenen Weise gestaltet sein. Die Buchse 7 ist eine Kunststoffbuchse. Das Befestigungselement 8 ist als Schraube oder Schraubelement ausgeführt und mit einem Kopf 9 versehen, der von der Hinterschneidung 6 unter Zwischenschaltung der Buchse 7 komplementär überfaßt ist.

## Patentansprüche

1. Fassadenplatte in Form einer Verbundglasscheibe aus wandseitiger Glasscheibe sowie sichtseitiger Scheibe, die durch eine Kunststoffschicht vereinigt sind, und Befestigungseinrichtung, **dadurch gekennzeichnet**, daß die wandseitige Glasscheibe (1) zumindest zwei Bohrungen (5) besitzt, die mit einer Hinterschneidung (6) versehen sind, und daß in die Bohrungen (5) unter Zwischenschaltung einer Buchse (7) jeweils ein metallisches Befestigungselement (8) formschlüssig eingesetzt ist.

2. Fassadenplatte nach Anspruch 1, dadurch gekennzeichnet, daß zumindest die wandseitige Glasscheibe (1) aus Einscheibensicherheitsglas besteht.

3. Fassadenplatte nach einem der Ansprüche 1 oder 2, dadurch gekennzeichnet, daß die Hinterschneidung (6) einen kegelstumpfförmigen Querschnitt nach Art einer Senkbohrung aufweist.

4. Fassadenplatte nach einem der Ansprüche 1 bis 3, dadurch gekennzeichnet, daß die wandseitige Glasscheibe (1) drei ein statisch bestimmtes Befestigungsaggregat bildende Befestigungselemente (8) besitzt.

5. Fassadenplatte nach einem der Ansprüche 1 bis 3, dadurch gekennzeichnet, daß die wandseitige Glasscheibe (1) im Bereich der Ecken jeweils ein Befestigungselement (8) aufweist.

6. Fassadenplatte nach einem der Ansprüche 1 bis 5, dadurch gekennzeichnet, daß die Buchse (7) als Kunststoffbuchse ausgeführt ist.

7. Fassadenplatte nach einem der Ansprüche 1 bis 6, dadurch gekennzeichnet, daß die Befestigungselemente (8) als Schraube oder Schraubelement ausgeführt sind und einen Kopf aufweisen, der von der Hinterschneidung (6) komplementär überfaßt ist.

## Claims

1. A facade plate in the form of a bonded pane of glass consisting of a wall-side pane of glass and a viewing-side pane of glass that are united by a layer of plastics, and an attachment unit, *characterized in that* the wall-side pane of glass (1) possesses at least two drilled holes (5) that are provided with an undercut (6), and that a metallic attachment unit (8) is inserted with shape-locking into each of the holes (5), a bush (7) being interposed.

2. A facade plate according to Claim 1, *characterized in that* at least the wall-side pane of glass (1) consists of a single pane of safety glass.

3. A facade plate according to one of Claims 1 or 2, *characterized in that* the undercut (6) has a cross-section of truncated conical shape, of a countersunk type.

4. A facade plate according to one of Claims 1 to 3, *characterized in that* the wall-side pane of glass (1) possesses three attachment units (8) forming a statically determinate attachment assembly.

5. A facade plate according to one of Claims 1 to 3, *characterized in that* the wall-side pane of glass (1) has an attachment unit (8) in the neighbourhood of each of its corners.

6. A facade plate according to one of Claims 1 to 5, *characterized in that* the bush (7) is constructed as a plastics bush.

7. A facade plate according to one of Claims 1 to 6, *characterized in that* the attachment units (8) are constructed as screws or screw units and have a head that fits into and is gripped by the undercut (6).

## Revendications

1. Panneau de façade réalisé sous la forme d'une plaque de verre composite formée d'une plaque de verre située côté mur ainsi que d'une plaque de verre transparente, qui sont réunies par une couche de matière plastique, et d'un dispositif de fixation, caractérisé en ce que la plaque de verre (1) située côté mur possède au moins deux perçages (5), qui comportent une partie en dépouille (6), et qu'un élément métallique de fixation (8) est respectivement inséré, selon une liaison par formes complémentaires, dans les perçages (5) moyennant l'interposition d'une douille (7).

2. Panneau de façade selon la revendication 1, caractérisé en ce qu'au moins la plaque de verre (1) située côté mur est formée d'un verre de sécurité trempé.

3. Panneau de façade selon l'une des revendications 1 ou 2, caractérisé en ce que la partie en dépouille (6) possède une section transversale de forme tronconique à la manière d'un perçage fraisé.

4. Panneau de façade selon l'une des revendications 1 à 3, caractérisé en ce que la plaque de verre (1) située côté mur possède trois éléments de fixation (8) constituant une unité de fixation déterminée du point de vue statique.

5. Panneau de façade selon l'une des revendications 1 à 3, caractérisé en ce que le panneau de verre (1) situé côté mur possède respectivement un élément de fixation (8) au niveau des angles.

6. Panneau de façade suivant l'une des revendications 1 à 5, caractérisé par le fait que la douille (7) est réalisée sous la forme d'une douille en matière plastique.

7. Panneau de façade selon l'une des revendications 1 à 6, caractérisé en ce que les éléments de fixation (8) sont réalisés sous la forme d'une vis ou d'un élément de vis et possèdent une tête qui est entourée, selon une disposition à formes complémentaires, par la partie en dépouille (6).

## Fig.1

## Fig.2